(19) Europäisches Patentamt
European Patent Office
Office européen des brevets

(11) Veröffentlichungsnummer: **0 407 839 B1**

(12) # EUROPÄISCHE PATENTSCHRIFT

(45) Veröffentlichungstag der Patentschrift: **18.01.95**

(51) Int. Cl.[6]: **C08G 63/60**

(21) Anmeldenummer: **90112519.5**

(22) Anmeldetag: **30.06.90**

(54) **Hochwärmeformbeständige, thermotrope, vollaromatische Polyester, Verfahren zu ihrer Herstellung sowie ihre Verwendung zur Herstellung von Formkörpern, Filamenten und Folien.**

(30) Priorität: **14.07.89 DE 3923294**

(43) Veröffentlichungstag der Anmeldung:
**16.01.91 Patentblatt 91/03**

(45) Bekanntmachung des Hinweises auf die Patenterteilung:
**18.01.95 Patentblatt 95/03**

(84) Benannte Vertragsstaaten:
**DE FR GB IT NL**

(56) Entgegenhaltungen:
**EP-A- 0 134 956** **EP-A- 0 257 558**
**EP-A- 0 259 670** **EP-A- 0 314 976**
**DE-A- 2 025 971** **GB-A- 2 158 832**

(73) Patentinhaber: **BAYER AG**
**D-51368 Leverkusen (DE)**

(72) Erfinder: **Eckhardt, Volker, Dr.**
**Bodelschwinghstrasse 14**
**D-4150 Krefeld (DE)**
Erfinder: **Freitag, Dieter, Dr.**
**Hasenheide 10**
**D-4150 Krefeld (DE)**
Erfinder: **Idel, Karsten-Josef, Dr.**
**Am Schwarzkamp 38**
**D-4150 Krefeld (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die vorliegende Erfindung betrifft hochmolekulare, thermotrope Polyester mit ausgezeichneter Zähigkeit, sehr hoher Wärmeformbeständigkeit und guter Verarbeitbarkeit, ein Verfahren zu ihrer Herstellung sowie ihre Verwendung zur Herstellung von Formkörpern, Filamenten, Fasern und Folien.

Als "thermotrop" bezeichnet man solche Substanzen, die flüssigkristalline Schmelzen bilden. Thermotrope Polyester sind bereits bekannt. Eine Literaturzusammenfassung befindet sich beispielsweise in der DE-A-3 325 787 und EP-A-134 959. Dort wird auch eine Untersuchung des flüssigkristallinen Zustandes der Polymerschmelzen beschrieben.

Aus thermotropen Polyestern lassen sich durch thermoplastische Verformung Formkörper aller Art, Folien, Filamente und Fasern mit außergewöhnlichen mechanischen Eigenschaften herstellen. Voraussetzung ist jedoch, daß die Polyester unzersetzt schmelzbar sind.

Die einfachsten vollaromatischen Polyester, wie Poly(4-hydroxybenzoat) und Poly(1,4-phenylenterephthalat) erfüllen diese Voraussetzung nicht. Sie schmelzen unter Zersetzung erst bei 600° C.

In DE-A-2 025 971 sind vollaromatische Polyester auf Basis von p-Hydroxybenzoesäure, aromatischen Dicarbonsäuren, wie Isophthalsäure oder Terephthalsäure, und aromatischen Dihydroxyverbindungen, wie Hydrochinon, Resorcin oder 4,4'-Dihydroxydiphenyl, beschrieben worden. Bei eigenen Untersuchungen wurde gefunden, daß einige der in den Beispielen (s. Beispiele 1, 2, 3, 4, 9 und 11) aufgeführten Zusammensetzungen Wärmeformbeständigkeiten oberhalb von 200° C aufweisen. Die Verarbeitungstemperaturen für diese hochwärmeformbeständigen Polyester liegen aber bei Temperaturen oberhalb von 400° C, so daß eine thermoplastische Umformung in konventionellen Aggregaten stark erschwert oder völlig unmöglich ist. Andererseits sind die in den Beispielen genannten niedrigerschmelzenden Zusammensetzungen durch eine Wärmeformbeständigkeit deutlich unterhalb von 200° C gekennzeichnet.

Für einige Anwendungsbereiche z.B. im Marktsegment Elektro/Elektronik werden Wärmeformbeständigkeiten von mehr als 250° C gefordert (ISO/R 75, Methode A), da die eingesetzten Kunststoffteile, wie Steckerleisten oder Spulenkörper, während des Fertigungsprozesses einem sogenannten Schwallötprozeß unterworfen werden. Hierbei treten kurzzeitig Temperaturen von bis zu 300° C auf. Gleichzeitig wird von in diesen Bereichen eingesetzten Kunststoffen eine gute Zähigkeit gefordert, da die Fertigteile während des Montagevorganges z.T. erheblichen Biegebelastungen ausgesetzt sind (z.B. Schnappverbindungen).

Die DE-A-3 629 211 beschreibt thermotrope, vollaromatische Polyester auf Basis von p-Hydroxybenzoesäure, Terephthalsäure, Isophthalsäure, Hydrochinon, 4,4-Dihydroxydiphenyl, sowie gegebenenfalls anderen substituierten, linearen Dihydroxyverbindungen. Die in den Beispielen genannten Polyester sind bei Temperaturen unterhalb von 380° C, z.T. unterhalb von 360° C verarbeitbar. Von den in den Beispielen beschriebenen Zusammensetzungen wiesen jedoch die Typen, die für Elektroanwendungen ausreichende Wärmeformbeständigkeiten besitzen, in eigenen Untersuchungen unbefriedigende Zähigkeiten auf (Beispiel 1). Umgekehrt liegt die Wärmeformbeständigkeit ausreichend zäher Zusammensetzungen erheblich zu niedrig (Beispiel 2).

Aufgabe der vorliegenden Erfindung war es daher, thermotrope, aromatische Polyester mit einer bisher unbekannten Eigenschaftskombination aus hoher Zähigkeit, guter thermoplastischer Verarbeitbarkeit und sehr hoher Wärmeformbeständigkeit bereitzustellen.

Die Schlagzähigkeit, bestimmt nach Izod, Methode 1C, sollte mindestens 50 $kJ/m^2$ , vorzugsweise mehr als 80 $kJ/m^2$ betragen.

Die Verarbeitungstemperatur sollte unterhalb von 380° C, vorzugsweise unterhalb von 360° C liegen.

Die Wärmeformbeständigkeit, gemessen nach ISO/R 75, Methode A, sollte mindestens 260° C betragen.

Überraschenderweise wurde gefunden, daß thermotrope Polyester die gewünschte Kombination vorteilhafter Eigenschaften dann besitzen, wenn sie aus p-Hydroxybenzoesäure, Hydrochinon, 4,4'-Dihydroxydiphenyl, Terephthalsäure und Isophthalsäure in genau definierten Konzentrationsverhältnissen aufgebaut sind.

Gegenstand der Erfindung sind also thermotrope, vollaromatische Polyester mit wiederkehrenden Struktureinheiten der Formeln

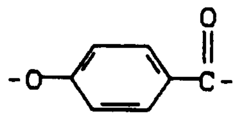

(I),

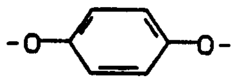

(II),

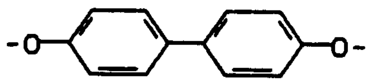

(III),

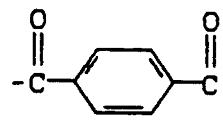

(IV) und

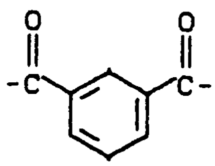

(V),

wobei die Polyester die einkondensierten Reste (I) in einer Menge von 64 - 68 Mol-%, vorzugsweise von 66 Mol-%, die einkondensierten Reste (II) in einer Menge von 15 - 19 Mol-%, vorzugsweise von 17 Mol-%, und die einkondensierten Reste (IV) in einer Menge von 25 - 29 Mol-%, vorzugsweise 27 Mol-%, jeweils bezogen auf die Summe der Reste (I), (II) und (III), enthalten, mit der Maßgabe, daß das Molverhältnis der einkondensierten Reste [(II) + (III)]/[(IV) + (V)] 0,95 bis 1,05:1,0, vorzugsweise jedoch 1,0:1,0, beträgt.

Die erfindungsgemäßen Polyester können die Struktureinheiten (I) bis (V), die sich von den entsprechenden Säuren und Hydroxyverbindungen ableiten, in statistischer Verteilung, in Segmenten oder in Blöcken enthalten.

Betreffend Komponente (I) ist darauf zu achten, daß längere Blöcke den Schmelzpunkt und die Schmelzviskosität stark erhöhen.

Als Endgruppen können die erfindungsgemäßen Polyester -COOH, -OH, $-OC_6H_5$, Acyloxy oder von Kettenabbrechern herrührende Reste enthalten. Bevorzugte Kettenabbrecher sind monofunktionelle aromatische Hydroxylverbindungen, wie 4-Hydroxydiphenyl, p-Nonylphenol, 4-(1,1,3,3-Tetramethyl-butyl)-phenol, $\beta$-Naphthol und aromatische Monocarbonsäuren, wie Benzoesäuren, Diphenylcarbonsäuren und Naphthalincarbonsäuren. Die Kettenabbrecher können in Mengen von 0,1 bis 15 Mol-%, bevorzugt 0,2 bis 5 Mol-%, bei Monohydroxylverbindungen bezogen auf Dihydroxylverbindungen, bei Monocarbonsäuren bezogen auf Dicarbonsäuren, eingesetzt werden.

Als Verzweigungsmittel können drei- oder höherfunktionelle, vorzugsweise drei- und vierfunktionelle - vorzugsweise aromatische - Monomere, wie Phloroglucin, 1,3,5-Benzoltricarbonsäuren oder 3,5-Dihydroxybenzoesäure, in Mengen von etwa 0,1 bis 2, bevorzugt bis 1,0 Mol-%, bei Poly- und Hydroxycarbonsäuren, bezogen auf Dicarbonsäuren, bei Polyolen bezogen auf Diphenole, eingesetzt werden.

Die Schmelzviskosität der erfindungsgemäßen Polyester, gemessen jeweils oberhalb der durch DSC (Differential Scanning Calorimetry) bestimmten Übergangstemperatur von der kristallinen in die flüssigkristalline Phase (üblicherweise zwischen 330 und 345° C) unter Verwendung einer Düse mit einem Länge/Durchmesser-Verhältnis von 20 bei einer Schergeschwindigkeit von $10^3 s^{-1}$, beträgt in der Regel 0,5 bis 2000, vorzugsweise 5 bis 1000, insbesondere 10 bis 500 Pa.s.

Die erfindungsgemäßen Polyester können nach verschiedenen Verfahren hergestellt werden, z.B. durch Kondensation bzw. Umesterung der von den Resten I, II, III, IV und V abgeleiteten Hydroxycarbonsäuren, Dicarbonsäuren und Diphenole oder ihrer reaktionsfähigen Derivate und anschließende Polykondensation (vgl. z.B. R.W.Lenz, "Synthetic routes to liquid cristalline polymers" in: Recent Advances in Liquid Cristalline Polymers, Elsevier, New York 1985).

Beispiele für bevorzugte Syntheseverfahren sind die Umsetzung der niederen Acylester der Verbindungen (I), (II) und (III) mit Terephthalsäure (IV) und Isophthalsäure (V), wobei die Acylester auch in situ hergestellt werden können, sowie die Umsetzung der Arylester der Verbindungen (I), (IV) und (V) mit Hydrochinon (II) und 4,4'-Dihydroxydiphenyl (III), wobei die Arylester ebenfalls in situ hergestellt werden können.

Nach einem besonders bevorzugten Syntheseverfahren werden die Acetate der Verbindungen (I), (II) und (III) mit Terephthalsäure (IV) und Isophthalsäure (V) umgesetzt, wobei die Acetate in situ hergestellt werden.

Die Reaktionen können in der Schmelze oder in inerten hochsiedenden Lösungsmitteln durchgeführt werden (vgl. z.B. DE-A-2 025 971).

Die Reste der Verbindungen (I) bis (V) werden im Verhältnis der Ausgangskomponenten in den Polyester eingebaut.

Es kann zweckmäßig sein, sowohl die Kondensation- bzw. Umesterungsreaktion als auch die Polykondensationsreaktionen katalytisch zu beschleunigen. Derartige Katalysatoren sind bekannt, z.B. Hydroxide, Halogenide, Alkoholate, Phenolate, Salze anorganischer oder organischer Säuren (vorzugsweise Carbonsäuresalze), Komplexsalze oder Mischsalze der Erdalkalimetalle, wie Magnesium, Calcium; der Nebengruppenelemente, wie Vanadium, Titan, Mangan, Cobalt, Nickel, Zink, Lanthan, Cer, Zirkonium oder der Elemente aus anderen Gruppen des Periodensystems, wie Germanium, Zinn, Blei und Antimon oder auch Alkalimetalle oder Erdalkalimetalle selbst, insbesondere Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titanalkoxide, wie Titantetrabutylat, Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl- und Diarylzinnoxid, Dibutyl-zinndiacetat, Dibutyl-dimethoxy-zinn.

Die Katalysatormengen betragen vorzugsweise 0,0001 bis 1, insbesondere 0,001 bis 0,2 Gew.-%, bezogen auf das Gesamtgewicht der eingesetzten Monomeren.

Die erfindungsgemäßen Polyester können bei Temperaturen von etwa 150° C bis 345° C hergestellt werden, wobei man im allgemeinen die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck auf ca. 0,1 mbar gesenkt wird.

Das erhaltene Produkt kann - vorzugsweise in Granulatform - einer Festphasennachkondensation gegebenenfalls unter vermindertem Druck bei Temperaturen von etwa 200° C bis 300° C, bevorzugt 240 bis 280° C, unterworfen werden; nach 1 bis 25 Stunden haben sich das Molekulargewicht erhöht und die daraus resultierenden Eigenschaften des Polyesters merklich verbessert.

Weiterer Gegenstand der Erfindung ist also ein Verfahren zur Herstellung der neuen Polyester, das dadurch gekennzeichnet ist, daß man die von den Resten I, II, III, IV und V abgeleiteten Hydroxycarbonsäure, Dicarbonsäuren und Diphenole oder ihre reaktiven Derivate, die auch in situ hergestellt werden können, gegebenenfalls in Gegenwart von Katalysatoren, Kettenabbrechern und Verzweigungsmitteln, bei Temperaturen von 150° C bis 345° C, gegebenenfalls unter vermindertem Druck umsetzt.

Die erfindungsgemäßen Polyester können mit bis zu 70 Gew.-%, bevorzugt 1 bis 65 Gew.-%, besonders bevorzugt 30-50 Gew-%, bezogen auf das Gesamtgewicht der gefüllten Massen an Verstärkungs- und/oder Füllstoffen abgemischt weden. Stellvertretend für derartige Stoffe seien Glasfasern, Kohlefasern, Glimmer, Quarzgut, Kaolin, Calciumsilikat, Feldspat und Kreide genannt.

Weiterhin können für spezielle Anwendungen Farbstoffe oder Pigmente, wie Ruß, Titandioxid, Cadmiumsulfid, Ultramarinblau oder Phthalocyaninfarbstoffe in Mengen bis zu 10 Gew.-% zugesetzt werden.

Die erfindungsgemäßen thermotropen Polyester können infolge ihrer relativ geringen Schmelzviskosität vorteilhaft aus der Schmelze zu Spritzgußformteilen, Filamenten, Fasern, Bändern und Filmen verarbeitet werden, wobei durch auftretende Scherkräfte eine Molekülorientierung erzielt wird, die in hohem Maße von der Stärke der Scherkräfte beeinflußt wird. Des weiteren zeigen sie eine ausgeprägte Strukturviskosität, d.h., daß die Schmelzviskosität bei Erhöhung der Scherkräfte stark abfällt. Geeignete Verarbeitungsverfahren sind Spritzguß, Extrusion, Pressen und Schmelzspinnen.

Aus den erfindungsgemäßen Polyestern können Formteile ausgezeichneter Steifigkeit und Zähigkeit, sehr hoher Wärmeformbeständigkeit und großer Dimensionsstabilität hergestellt werden. Da die Polyester

außerordentlich chemikalienresistent und flammwidrig sind, eignen sie sich bevorzugt zur Herstellung von

- elektrotechnischen Artikeln, wie Steckerleisten, Spulenkörpern, Leiterplatten, Steckkontakten, Einbettmassen für integrierte Schaltungen, Armaturenteilen,
- Teilen chemisch-technischer Apparate, wie Rohren, Behälterauskleidungen, Rotoren, Gleitlagern, Dichtungen,
- Teilen der Flugzeuginnenausstattung,
- Teilen medizinisch-technischer Geräte sowie Bauteilen von Klimaanlagen und Ventilen.

Weiterer Gegenstand der Erfindung ist also die Verwendung der neuen Polyester zur Herstellung von Formkörpern, Filamenten, Fasern und Folien.

## Beispiele

Die Bestimmung der Biegefestigkeit wurde an Biegestäben (80 mm x 10 mm x 4 mm) gemäß DIN 53 452 (ISO/R 178) durchgeführt. Am gleichen Prüfkörper erfolgte die Bestimmung des Biege-E-Moduls gemäß DIN 53 457. Die Messung der Wärmeformbeständigkeit wurde durch Bestimmung der HDT-A-Temperatur an Rechteckstäben (80 mm x 10 mm x 4 mm) gemäß DIN 53 461 (ISO 75) vorgenommen. (Belastung: 181,5 $N/mm^2$). Die Prüfung der Schlagzähigkeit $a_n$ und der Kerbschlagzähigkeit $a_k$ erfolgte an 80 mm x 10 mm x 4 mm-Stäben gemäß DIN 53 453 (ISO/R 179).

## Beispiel 1

In einen beheizbaren 2-l-Kessel aus V4A-Stahl (Fa. Juchheim) mit Rührer, Stickstoffeinleitung und Destillationsaufsatz wurden die folgenden Substanzen eingefüllt:

235,91 g = 1,708 Mol P-Hydroxybenzoesäure
48,44 g = 0,440 Mol Hydrochinon
81,92 g = 0,440 Mol 4,4'-Dihydroxydiphenyl
116,08 g = 0,699 Mol Terephthalsäure
30,10 g = 0,181 Mol Isophthalsäure
383,43 g = 3,815 Mol Acetanhydrid
0,264 g Magnesiumacetat
0,100 g Hydrochinonsulfonsaure-K-Salz

Unter Stickstoffatmosphäre wurde auf 170° C erhitzt und, sobald die Destillation von Essigsäure nachließ, die Temperatur im Reaktionsgefäß im Verlauf von 3 Stunden schrittweise bis auf 320° C angehoben. Anschließend wurde innerhalb einer Stunde unter weiterer Temperaturerhöhung bis auf 340° C der Druck stufenweise bis auf 20 mbar abgesenkt. Der Kessel wurde dann mit Stickstoff belüftet und nach einer Absitzzeit von 15 Minuten das Produkt durch ein Bodenventil herausgedrückt und nach dem Erkalten durch Mahlen zerkleinert.

Bei der Untersuchung durch DSC (Differential Scanning Calorimetry) wies der Polyester eine Schmelztemperatur von 338° C auf. Die bei 350° C und einer Schergeschwindigkeit von $10^3 s^{-1}$ ermittelte Schmelzviskosität lag bei 16 Pa.s. Durch polarisationsmikroskopische Untersuchung der Schmelze wurde flüssigkristallines Verhalten nachgewiesen.

Durch Spritzgußverarbeitung bei 350° C wurde Prüfkörper (80 x 10 x 4 mm) hergestellt und technologisch charakterisiert. Aus den in Tab. 1 zusammengestellten Ergebnissen wird die überlegende Eigenschaftskombination der erfindungsgemäßen Polyester deutlich:

- Die Wärmeformbeständigkeit (HDT-A) liegt bei 272° C.
- Die Schlagzähigkeit beträgt 94 $kJ/m^2$.

Die nachfolgenden Vergleichsbeispiele 1 bis 3 demonstrieren den erheblichen Fortschritt durch die erfindungsgemäßen Polyester gegenüber dem Stand der Technik.

## Vergleich 1 (DE-A-3 629 211; Beispiel 1)

In die in Beispiel 1 beschriebene Apparatur wurden die folgenden Substanzen eingefüllt:

206,80 g = 1,50 Mol p-Hydroxybenzoesäure
132,48 g = 0,80 Mol Terephthalsäure
33,12 g = 0,20 Mol Isophthalsäure
65,85 g = 0,60 Mol Hydrochinon
74,24 g = 0,40 Mol 4,4'-Dihydroxydiphenyl
391,78 g = 3,84 Mol Acetanhydrid

0,264 g Magnesiumacetat
0,100 g Hydrochinonsulfonsäure-K-Salz
Unter Stickstoffatmosphäre wurde auf 170° C erhitzt und, sobald die Destillation von Essigsäure nachließ, die Temperatur im Reaktionsgefäß im Verlauf von 3 Stunden schrittweise bis auf 320° C angehoben. Anschließend wurde unter weiterer Temperaturanhebung auf den maximal möglichen Wert von 345° C der Druck abgesenkt. Bei einem Druck von 150 mbar wurde die Reaktionsmischung fest, so daß eine weitere Rührung nicht möglich war. Eine Isolierung des Produktes durch Ablassen aus dem Bodenventil konnte nicht durchgeführt werden.

An einer aus der erkalteten Reaktionsmischung nach Abnehmen des Reaktordeckels isolierten Probe wurde durch DSC eine Schmelztemperatur von 348° C bestimmt. Spritzgußuntersuchungen konnten wegen der problematischen Isolierbarkeit des Produktes nicht durchgeführt werden. Zur Bestimmung der Eigenschaften wurde daher die in Vergleichsbeispiel 2 beschriebene Laborpräparationsmethode herangezogen.

Vergleich 2 (DE-A-3 629 211; Beispiel 1 [Labormethode])

In einem 1 l-Dreihalskolben mit Rührer, Stickstoffeinleitung und Destillationsaufsatz wurden die folgenden Substanzen eingewogen:
136,49 g = 0,99 Mol p-Hydroxybenzoesäure
87,44 g = 0,53 Mol Terephthalsäure
21,86 g = 0,13 Mol Isophthalsäure
43,46 g = 0,40 Mol Hydrochinon
49,00 g = 0,26 Mol 4,4'-Dihydroxydiphenyl
258,57 g = 2,53 Mol Acetanhydrid
0,174 g Magnesiumacetat
0,066 g Hydrochinonsulfonsäure-K-Salz
Unter Stickstoffatmosphäre wurde mittels Ölbad auf 170° C erhitzt. Sobald die Destillation von Essigsäure nachließ, wurde die Temperatur im Reaktionsgefäß im Verlauf einer weiteren Stunde auf 230° C, anschließend im Verlauf von 2 Stunden bis auf 300° C erhöht. Nach 75 min bei dieser Temperatur wurde Vakuum angelegt. Unter Anhebung der Temperatur bis auf 360° C wurde das Vakuum im Verlauf von 50 min bis auf 0,5 mbar abgesenkt. Anschließend wurde das Ölbad entfernt und das erstarrte Produkt durch Zerschlagen des Kolbens isoliert und durch Mahlen zerkleinert.

Bei Untersuchung durch DSC wies der Polyester eine Schmelztemperatur von 347° C auf. Die bei 350° C und einer Schergeschwindigkeit von $10^3 s^{-1}$ ermittelte Schmelzviskosität lag bei 25 Pa.s. Durch polarisationsmikroskopische Untersuchung der Schmelze wurde flüssigkristallines Verhalten nachgewiesen.

An durch Spritzgußverarbeitung bei 360°C hergestellten Prüfkörpern (80 x 10 x 4 mm) wurden die in Tab. 1 zusammengestellten technologischen Eigenschaften ermittelt.

- Die Wärmeformbeständigkeit (HDT A) liegt bei 265° C
- Die Schlagzähigkeit liegt lediglich bei 25kJ/$m^2$

Vergleich 3 (DE-A-3 629 211; Beispiel 2)

In die in Beispiel 1 beschriebene Apparatur wurden folgende Substanzen eingewogen:
203,37 g = 1,470 mol p-Hydroxybenzoesäure
13,99 g = 0,686 mol Terephthalsäure
48,86 g = 0,294 mol Isophthalsäure
53,97 g = 0,490 mol Hydrochinon
91,26 g = 0,490 mol 4,4'-Dihydroxydiphenyl
385,29 g = 3,77 mol Acetanhydrid
0,264 g Magnesiumacetat
0,100 g Hydrochinonsulfonsäure-K-Salz
Nach dem in Beispiel 1 beschriebenen Temperatur/Zeit-Programm wurde ein hellbeiger Polyester erhalten. Bei Untersuchung durch DSC wies der Polyester eine Schmelztemperatur von 316° C auf. Die bei 350° C und einer Schergeschwindigkeit von $10^3 s^{-1}$ ermittelte Schmelzviskosität lag bei 14 Pa.s. Durch polarisationsmikroskopische Untersuchung der Schmelze wurde flüssigkristallines Verhalten nachgewiesen.

An durch Spritzgußverarbeitung bei 340° C hergestellten Prüfkörpern (80 x 10 x 4 mm) wurden die in Tabl. 1 zusammengestellten technologischen Eigenschaften ermittelt.

- Die Wärmeformbeständigkeit (HDT A) liegt lediglich bei 194° C.
- Die Schlagzähigkeit liegt bei 68 kJ/$m^2$.

Die Vergleichsbeispiele 4 und 5 demonstrieren den starken Einfluß der Terephthalsäure - bzw Isophthalsäureanteile auf Verarbeitbarkeit und Wärmeformbeständigkeit.

Vergleich 4

In die in Beispiel 1 beschriebene Apparatur wurden folgende Substanzen eingewogen:
235,91 g = 1,708 mol p-Hydroxybenzoesäure
48,44 g = 0,440 mol Hydrochinon
81,92 g = 0,440 mol 4,4'-Dihdroxydiphenyl
124,68 g = 0,750 mol Terephthalsäure
21,50 g = 0,129 mol Isophthalsäure
389,43 g = 3,815 mol Acetanhydrid
0,264 g Magnesiumacetat
0,100 g Hydrochinonsulfonsäure-K-Salz
Unter Stickstoffatmosphäre wurde auf 170° C erhitzt und, sobald die Destillation von Essigsäure nachließ, die Temperatur im Reaktionsgefäß im Verlauf von 3 Stunden schrittweise bis auf 320° C angehoben. Anschließend wurde unter weiterer Temperaturanhebung auf den maximal möglichen Wert von 345° C der Druck abgesenkt. Bei einem Druck von 300 mbar wurde die Reaktionsmischung fest, so daß eine weitere Rührung nicht möglich war. Eine Isolierung des Produktes durch Ablassen aus dem Bodenventil konnte nicht durchgeführt werden.

An einer aus der erkalteten Reaktionsmischung nach Abnehmen des Reaktordeckels isolierten Probe des Produktes wurde durch DSC eine Schmelztemperatur von 362° C bestimmt Spritzgußuntersuchungen konnten wegen der problematischen Isolierbarkeit des Produktes nicht durchgeführt werden.

Vergleich 5

In die in Beispiel 1 beschriebene Apparatur wurde folgende Substanzen eingewogen:
235,91 g = 1,708 mol p-Hydroxybenzoesäure
48,44 g = 0,440 mol Hydrochinon
81,92 g = 0,440 mol 4,4'-Dihydroxydiphenyl
103,18 g = 0,621 mol Terephthalsäure
42,99 g = 0,259 mol Isophthalsäure
389,43 g = 3,815 mol Acetanhydrid
0,264 g Magnesiumacetat
0,100 g Hydrochinonsulfonsäure-K-Salz
Nach dem in Beispiel 1 beschriebenen Temperatur/Zeit-Programm wurde ein hellbeiger Polyester erhalten. Bei Untersuchungen durch DSC wies der Polyester eine Schmelztemperatur von 332° C auf. Die bei 350° C und einer Schergeschwindigkeit von $10^3 s^{-1}$ ermittelten Schmelzviskosität betrug 16 Pa.s. Durch polarisationsmikroskopische Unterschung der Schmelze wurde flüssigkristallines Verhalten nachgewiesen.

An durch Spritzgußverarbeitung bei 340° C hergestellten Prüfkörpern (80 x 10 x 4 mm) wurden die in Tabl. 1 zusammengestellten technologischen Eigenschaften ermittelt.

- Der im Unterschied zu Beispiel 1 niedrigere Terephthalsäureanteil führt zu deutlich niedrigerer Wärmeformbeständigkeit (HDT A = 229° C)
- Die Schlagzähigkeit liegt bei 72 kJ/m$^2$.

Vergleichsbeispiel 6 demonstriert den Einfluß, den die Anhebung des Hydrochinonanteils auf die Herstellbarkeit bzw. Verarbeitbarkeit der Polyester hat.

Vergleich 6

In die in Beispiel 1 beschriebene Apparatur wurden folgende Substanzen eingewogen:
235,91 g = 1,708 mol p-Hydroxybenzoesäure
68,37 g = 0,621 mol Hydrochinon
48,22 g = 0,259 mol 4,4'-Dihydroxydiphenyl
116,08 g = 0,699 mol Terephthalsäure
30,10 g = 0,181 mol Isophthalsäure
389,43 g = 3,815 mol Acetanhydrid
0,264 g = Magnesiumacetat
0,100 g = Hydrochinonsulfonsäure-K-Salz

Unter Stickstoffatmosphäre wurde auf 170° C erhitzt und, sobald die Destillation von Essigsäure nachließ, die Temperatur im Reaktionsgefäß im Verlauf von 3 Stunden schrittweise bis auf 320° C angehoben. Anschließend wurde unter weiterer Temperaturanhebung auf den maximal möglichen Wert von 345° C der Druck abgesenkt. Bei einem Druck von 400 mbar wurde die Reaktionsmischung fest, so daß eine weitere Rührung nicht möglich war. Eine Isolierung des Produktes durch Ablassen aus dem Bodenventil konnte nicht durchgeführt werden.

An einer aus der erkalteten Reaktionsmischung nach Abnehmen des Reaktordeckels isolierten Probe des Produktes wurde durch DSC eine Schmelztemperatur von 371° C bestimmt. Spritzgußuntersuchungen konnten wegen der problematischen Isolierbarkeit des Produktes nicht durchgeführt werden.

Beispiel 2

In einem beheizbaren 400 l-Kessel aus V4A-Stahl mit Rührer, Stickstoffeinleitung und Destillationsaufsatz wurden die folgenden Substanzen eingefüllt:

84,69 kg = 613,15 mol p-Hydroxybenzoesäure
17,08 kg = 155,63 mol Hydrochinon
28,89 kg = 155,15 mol 4,4′-Dihydroxydiphenyl
40,81 kg = 245,65 mol Terephthalsäure
10,74 kg = 64,65 mol Isophthalsäure
138,55 kg = 1357,0 mol Acetanhydrid
94 g Magnesiumacetat
36 g Hydrochinonsulfonsäure-K-Salz

Nach dreimaligem Evakuieren und Belüften mit Stickstoff wurde der Kessel auf 170° C aufgeheizt. Stickstoff wurde mit einer Geschwindigkeit von 50 l/h übergeleitet. Nach 2 Stunden bei 170° C wurde die Temperatur auf 200° C, nach 30 Minuten bei dieser Temperatur weiter auf 250° C erhöht. Schließlich wurde auf 330° C und nach weiteren 90 Minuten auf 340° C aufgeheizt. Vakuum wurde angelegt und der Druck im Kessel im Verlauf einer Stunde bis auf 30 mbar gesenkt. Der Kessel wurde dann mit Stickstoff belüftet und nach einer Absitzzeit von 30 Minuten wurde das Produkt durch ein Bodenventil herausgedrückt und granuliert.

Ein Teil des so isolierten hellbeigen Polyesters wurde bei 250° C in fester Phase nachkondensiert (20 Stunden).

Die durch DSC bestimmte Schmelztemperatur des Produktes betrug 337° C. Bei 350° C und $10^3 s^{-1}$ wurde eine Schmelzviskosität von 43 Pa.s. ermittelt.

Durch Spritzgußverarbeitung auf einer Arburg 270 Spritzgußmaschine bei einer Temperatur von 350° C wurden Prüfkörper hergestellt und technologisch charakterisiert. Folgende Eigenschaften wurden ermittelt:

| | |
|---|---|
| Schlagzähigkeit (Izod IC) | 108 kJ/m$^2$ |
| Kerbschlagzähigkeit (Izod IA) | 47 kJ/m$^2$ |
| Zug-E-Modul | 20,5 GPa |
| Zugfestigkeit | 213 MPa |
| Reißdehnung | 1,2 % |
| Biege-E-Modul | 13,1 GPa |
| Biegefestigkeit | 174 MPa |
| Randfaserdehnung | 3,6 % |
| HDT A | 275°C |
| HDT C | 240°C |

Die erfindungsgemäßen Polyester übertreffen in ihrer Eigenschaftskombination aus hoher Wärmeformbeständigkeit bei günstiger Verarbeitbarkeit, hoher Steifigkeit und Festigkeit sowie ausgezeichneter Schlagzähigkeit alle bekannten thermotropen Polyester.

Tabelle 1: Eigenschaften der Polyester gemäß Beispielen 1, 2 und Vergleich 1 - 6

| Beispiel | Zusammensetzung (mol-%)[1] pHB | Hy | DOD | TS | IS | $T_m$[2] (°C) | $T_{Verarb.}$[3] (°C) | HDT A[4] (°C) | $a_n$[5] (kJ/m²) |
|---|---|---|---|---|---|---|---|---|---|
| 1[6] | 66 | 17 | 17 | 27 | 7 | 338 | 350 | 272 | 94 |
| 2[7] | 66 | 17 | 17 | 27 | 7 | 337 | 350 | 274 | 108 |
| Vergleich 1 | 60 | 24 | 16 | 32 | 8 | 348 | im Stahlautoklaven nicht herstellbar | | |
| Vergleich 2[8] | 60 | 24 | 16 | 32 | 8 | 347 | 360 | 265 | 25 |
| Vergleich 3 | 60 | 20 | 20 | 28 | 12 | 316 | 340 | 194 | 68 |
| Vergleich 4 | 66 | 17 | 17 | 29 | 5 | 362 | im Stahlautoklaven nicht herstellbar | | |
| Vergleich 5 | 66 | 17 | 17 | 24 | 10 | 332 | 340 | 229 | 72 |
| Vergleich 6 | 66 | 24 | 10 | 27 | 7 | 371 | im Stahlautoklaven nicht herstellbar | | |

1) pHB - p-Hydroxybenzoesäure
Hy - Hydrochinon
DOD - 4,4'-Dihydroxydiphenyl
TS - Terephthalsäure
IS - Isophthalsäure

2) Schmelztemperatur aus DSC Messung

3) Verarbeitungstemperatur

4) Wärmeformbeständigkeit nach ISO/R75 (Methode A)

5) Schlagzähigkeit bestimmt nach Izod, Methode 1 C

6) Herstellung im 2 l-Stahlautoklaven

7) Herstellung im 400 l-Stahlautoklaven

8) Herstellung in Laborglasapparatur

## Patentansprüche

1. Thermotrope, vollaromatische Polyester mit wiederkehrenden Struktureinheiten der Formeln

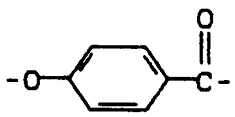

(I),

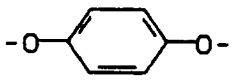

(II),

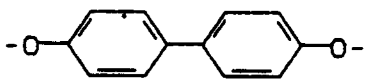

(III),

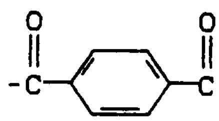

(IV) und

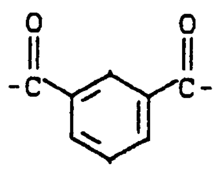

(V),

wobei die Polyester die einkondensierten Reste (I) in einer Menge von 64 - 68 Mol-%, die einkondensierten Reste (II) in einer Menge von 15 - 19 Mol-% und die einkondensierten Reste (IV) in einer Menge von 25 - 29 Mol-%, jeweils bezogen auf die Summe der Reste (I), (II) und (III), enthalten, mit der Maßgabe, daß das Molverhältnis der einkondensierten Reste [(II) + (III)]/[(IV) + (V)] 0,95 bis 1,05:1,0 beträgt.

2. Polyester nach Anspruch 1, dadurch gekennzeichnet, daß sie die einkondensierten Reste (I) in einer Menge von 66 mol-% enthalten.

3. Polyester nach Anspruch 1, dadurch gekennzeichnet, daß sie die einkondensierten Reste (II) in einer Menge von 17 mol-% enthalten.

4. Polyester nach Anspruch 1, dadurch gekennzeichnet, daß sie die einkondensierten Reste (IV) in einer Menge von 27 mol-% enthalten.

5. Polyester nach Anspruch 1, dadurch gekennzeichnet, daß das Molverhältnis der einkondensierten Reste [(II) + (III)]/[(IV) + (V)] 1:1 beträgt.

6. Gefüllte Massen auf der Basis von einem Polyester nach Anspruch 1, dadurch gekennzeichnet, daß sie bis zu 70 Gew.-%, bezogen auf das Gesamtgewicht der gefüllten Massen, an Verstärkungs- und/oder Füllstoffen enthalten.

7. Verfahren zur Herstellung der Polyester nach Ansprüchen 1 bis 6, dadurch gekennzeichnet, daß reaktionsfähige Derivate der Komponenten (I) bis (V), die auch in situ hergestellt werden können,

gegebenenfalls in Gegenwart von Kettenabbrechern, Verzweigungsmitteln und Katalysatoren, bei Temperaturen von 150 bis 345 ° C, gegebenenfalls unter verminderten Druck, umgesetzt werden.

**8.** Verwendung der Polyester nach Ansprüchen 1 bis 6 zur Herstellung von Formkörpern, Filamenten, Fasern und Filmen.

## Claims

**1.** Thermotropic, fully aromatic polyesters with repeating structural units of the formulas

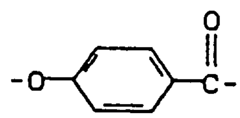

(I),

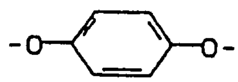

(II),

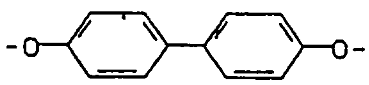

(III),

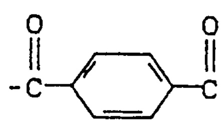

(IV) and

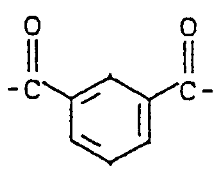

(V),

wherein the polyesters contain the co-condensed groups (I) in an amount of 64 - 68 mol%, the co-condensed groups (II) in an amount of 15 - 19 mol% and the co-condensed groups (IV) in an amount of 25 - 29 mol%, each being with reference to the sum of the groups (I), (II) and (III), with the proviso that the molar ratio of the co-condensed groups [(II) + (III)]/[(IV) + (V)] is 0.95 to 1.05 : 1.0.

**2.** Polyesters according to Claim 1, characterised in that they contain co-condensed groups (I) in an amount of 66 mol%.

**3.** Polyesters according to Claim 1, characterised in that they contain co-condensed groups (II) in an amount of 17 mol%.

**4.** Polyesters according to Claim 1, characterised in that they contain co-condensed groups (IV) in an amount of 27 mol%.

**5.** Polyesters according to Claim 1, characterised in that the molar ratio of co-condensed groups [(II) + (III)]/[(IV) + (V)] is 1:1.

6. Filled materials based on a polyester according to Claim 1, characterised in that they contain up to 70 wt.%, with respect to the total weight of the filled materials, of reinforcing substances and/or fillers.

7. A process for preparing polyesters according to Claims 1 to 6, characterised in that reactive derivatives of components (I) to (V), which may also be prepared in situ, optionally in the presence of chain terminators, branching agents and catalysts, are reacted at temperatures of 150 to 345 °C, optionally under reduced pressure.

8. Use of the polyesters according to Claims 1 to 6 to produce moulded items, filaments, fibres and films.

**Revendications**

1. Polyesters thermotropes entièrement aromatiques à motifs de structure répétée de formules

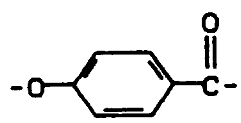

(I),

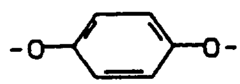

(II),

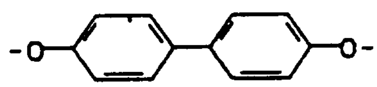

(III),

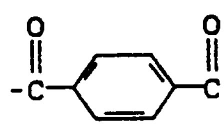

(IV) et

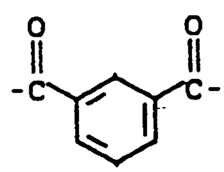

(V),

les polyesters contenant les radicaux (I) à l'état condensé en quantité de 64 à 68 mol, les radicaux (II) à l'état condensé en quantité de 15 à 19 mol% et les radicaux (IV) à l'état condensé en quantité de 25 à 29 mol%, dans tous les cas par rapport à la somme des radicaux (I), (II) et (III), sous réserve que le rapport molaire [(II) + (III)]/[(IV) + (V)] entre les radicaux condensés va de 0,95 à 1,05:1,0.

2. Polyesters selon la revendication 1, caractérisés en ce qu'ils contiennent les radicaux (I) à l'état condensé en quantité de 66 mol%.

3. Polyesters selon la revendication 1, caractérisés en ce qu'ils contiennent les radicaux (II) à l'état condensé en quantité de 17 mol%.

4. Polyesters selon la revendication 1, caractérisés en ce qu'ils contiennent les radicaux (IV) à l'état condensé en quantité de 27 mol%.

**5.** Polyesters selon la revendication 1, caractérisés en ce que le rapport molaire [(II) + (III)]/[(IV) + (V)] entre les radicaux condensés est de 1:1.

**6.** Masses chargées à base d'un polyester selon la revendication 1, caractérisées en ce qu'elles contiennent jusqu'à 70 % de leur poids d'agents renforçants et/ou matières de charge.

**7.** Procédé de préparation des polyesters selon les revendications 1 à 6, caractérisé en ce que l'on fait réagir à des températures de 150 à 345 °C, éventuellement sous vide, des dérivés réactifs des composants (I) à (V), qui peuvent également être préparés in situ, éventuellement en présence de coupeurs de chaîne, d'agents ramifiants et de catalyseurs.

**8.** Utilisation des polyesters selon les revendications 1 à 6 pour la fabrication d'objets moulés, de filaments, de fibres et de pellicules.